# EUROPÄISCHE PATENTSCHRIFT

(11) **EP 2 169 929 B1**
(45) Veröffentlichungstag und Bekanntmachung des Hinweises auf die Patenterteilung: **23.11.2016**
(21) Anmeldenummer: 08016916.2
(22) Anmeldetag: 25.09.2008
(51) Int. Cl.: H04M 3/42

(54) **Verfahren, Telefon, Kommunikationseinrichtung, Kommunikationsserver und Informationsserver zum Bereitstellen eines Dienstes**
Method, telephone, communication device, communication server and information server for providing a service
Procédé, téléphone, dispositif de communication, serveur de communication et serveur d'information pour la préparation d'un service

(43) Veröffentlichungstag der Anmeldung: 31.03.2010
(73) Patentinhaber: Unify GmbH & Co. KG, 80807 München (DE)
(72) Erfinder: Bozionek, Bruno, 33178 Borchen (DE); Hanna, Thomas, 32758 Detmold (DE); Kunte, Klaus-Josef, 33178 Borchen (DE)
(74) Vertreter: Fritzsche, Thomas

(56) Entgegenhaltungen:
- US-A1- 2007 121 910
- US-B1- 6 332 020
- US-B1- 6 687 242

## Beschreibung

Die Erfindung betrifft ein Verfahren zum Bereitstellen eines Dienstes an einem Telefon gemäß dem Oberbegriff des Anspruchs 1, eine Verwendung eines Telefons und ein Kommunikationssystem gemäß dem Oberbegriff des Anspruchs 12.

Büro-Arbeitsplätze von Firmen und anderen Organisationen zeichnen sich häufig dadurch aus, dass ein Mitarbeiter abwechselnd oder zeitgleich Zugriff auf einen Arbeitsplatzrechner und ein Telefon besitzt. Somit kann ein Mitarbeiter den Arbeitsplatzrechner beispielsweise zur Beschaffung von Information durch Abfrage von Internet-Webseiten durch Abfrage mittels eines Browsers einsetzen.

Problematisch kann es sein, wenn ein Mitarbeiter den Arbeitsplatzrechner und das Telefon gleichzeitig bedienen möchte. Dies ist häufig schwierig möglich, da für den Arbeitsplatzrechner häufig eine Bedienung mit beiden Händen nötig ist und am Telefon üblicherweise zumindest eine Hand zum Halten des Hörers nötig ist. Somit besteht ein Wunsch nach einer Möglichkeit, mit einfachen Bedienschritten Information zu erhalten und angezeigt zu bekommen.

In US 6,687,242 B1 ist ein System beschrieben, bei dem Teilnehmern ein Universal Resource Locator (URL) zur Verfügung gestellt werden, der einmalig z.B. eine Website identifiziert, die von einem anrufenden Teilnehmer aufrechterhalten wird. Auf diese Website greift der Teilnehmer über eine Internetverbindung von seinem Handgerät zu.

In US 2007/121910 A1 ist ein Verfahren beschrieben, bei dem zusätzliche Informationen über einen angerufenen Teilnehmer auf ein Endgerät eines anrufenden Teilnehmers automatisch abgerufen und angezeigt werden. Wenn der Anrufer einen Anruf tätigt, wird die gewählte Nummer zum Aufsuchen und zur Rücksendung eines Universal Resource Locator (URL) des angerufenen Teilnehmers an den Anrufer verwendet. Auch hier ist eine Internetverbindung des Endgerätes zum Aufruf der mit der URL verbundenen Website erforderlich.

In US 6332020 B1 ist ein Analog Services Interface (ADSI) Downloadsystem beschrieben mit mindestens einem ADSI Telefon, einem Telefonnetz, einem Netzanmeldungsserver, einer Downloadanforderungdatenbank, und mindestens einer entfernten Stelle auf dem WWW oder auf einem geschützten Netz. In Erwiderung auf einen vom Anrufer initiierten Download mittels eines Anrufes, während dem der Anrufer nicht erreichbar ist, greift der Server auf die Stelle zu und überträgt die Datei zum Server, wo sie mit einer ADSI Download-Vorlage verbunden wird, wonach die resultierende Datei zu einer Speicherstelle im Telefon wird übertragen.

Aufgabe ist daher die Bereitstellung eines von einer Sprachverbindung unabhängigen Informationsdienstes bei einem Telefon, wobei eine hohe Sicherheit der Dienstverbindung für das Telefon gegeben ist und das Telefon während einer Ausführung des Dienstes für ein- und ausgehende Telefonate ohne Einschränkung zur Verfügung steht.

Gelöst wird diese Aufgabe durch ein Verfahren gemäß dem Patentanspruch 1, durch eine Verwendung eines Telefons gemäß dem Patentanspruch 11 und durch ein Kommunikationssystem gemäß dem Patentanspruch 12.

Vorteilhafte Ausgestaltungen und Weiterbildungen der Erfindung sind weiterhin in den abhängigen Ansprüchen angegeben.

Bei dem erfindungsgemäßen Verfahren zum Bereitstellen eines Dienstes an einem Telefon wird eine Benutzeraktion am Telefon zum Auslösen eines von einer Sprachverbindung unabhängigen Dienstes erfasst. Bei dem Dienst handelt es sich vorzugsweise explizit nicht um ein Leistungsmerkmal des Telefons, sondern um einen Dienst, der im Wesentlichen lediglich die Anzeige- und Eingabe-Möglichkeiten des Telefons nutzt, eventuell unter Ausnutzung von Informationen, die dem Telefon zur Verfügung stehen. Die Benutzeraktion ist somit nicht ein Aktivieren eines Leistungsmerkmals oder einer Funktion, die primär mit einem Telefoniedienst in Bezug steht. Ausgelöst durch das Erfassen der Benutzeraktion wird eine erste Übertragung durch das Telefon an einen Kommunikationsserver, zu dem das Telefon zugeordnet ist, initiiert.

Das Telefon, der Kommunikationsserver zur privaten Vermittlung oder Bereitstellung von Sprachdiensten für bei dem Kommunikationsserver registrierte Telefone und ein Informationsserver sind in einem abgegrenzten Intranet oder abgegrenzten Intranet oder abgegrenzten lokalen Netzwerk angeordnet.

Weiterhin wird ebenfalls ausgelöst durch das Erfassen der Benutzeraktion durch das Telefon eine Überwachung auf beim Telefon eingehenden Daten, die zu einer zweiten Übertragung zugehörig sind, mittels eines Port-Listeners oder eines Event-Listeners derart gestartet, dass die zweite Übertragung von der ersten Übertragung und einer Sprachverbindung unabhängig ist. Bei Eingehen der ersten Übertragung beim Kommunikationsserver wird durch den Kommunikationsserver eine Identifikationsinformation - beispielsweise eine gewählte Dienst-Rufnummer, die im Kommunikationsserver für den erfindungsgemäßen Dienst konfiguriert ist - der ersten Übertragung ermittelt, aufgrunddessen ein der Identifikationsinformation zugeordneter von einem Daten-Server bereitzustellender Datensatz durch einen Informationsserver ermittelt wird. Das Ermitteln des Datensatzes erfolgt dabei beispielsweise durch Auslesen aus einer lokalen Datenbank bzw. lokalen Speichers oder durch Abfragen eines Internet-Servers.

Nach dem Ermitteln des Datensatzes wird - insbesondere durch einen Informationsserver oder optional auch durch den Kommunikationsserver - die von einer Sprachverbindung unabhängige zweite Übertragung an das Telefon initiiert, wobei die zweite Übertragung die aus dem ermittelten Datensatz ausgelesenen ausschließlich für eine Anzeige am Telefon vorgesehenen Daten umfasst.

Bei Erkennen des Eingangs der Daten beim Telefon im Rahmen der Überwachung, werden die Daten durch das Telefon erfasst und ausgegeben. Vorzugsweise kann die Ausgabe an einem Display des Telefons textuell oder grafisch erfolgen.

Durch dieses Verfahren ergibt sich insbesondere der Vorteil, dass vorzugsweise Informationen, die üblicherweise nur über Webseiten abzufragen sind und in einem Browser eines Arbeitsplatzrechners ausgegeben werden, an einem Telefon ausgegeben werden können, ohne dass dafür das Telefon eine explizite oder zusätzliche Verbindung ins Internet aufbaut. Die auszugebenden Inhalte können über den Informationsserver ermittelt werden und werden nicht durch eine Direktverbindung vom Telefon ins Internet abgefragt. Somit ist vorteilhaft, dass das Telefon nicht Web-Protokolle wie HTML (Hyper Text Markup Language) unterstützen muss, was einerseits eine einfachere Implementierung im Telefon ermöglicht und andererseits eine erhöhte Sicherheit bietet, da in der Web-Übertragung eingebettete Schadsoftware aus dem Internet nicht zum Telefon übermittelt wird oder aufgrund der nicht vorhandenen direkten Verbindung ins Internet, umgekehrte Angriffe aus dem Internet gegen das Telefon nicht möglich sind, da insbesondere die IP-Adresse (IP: Internet Protocol) des Telefons für die kontaktierten Server im Internet nicht sichtbar gemacht wird.

Auszugebende Inhalte von Interesse können zum Beispiel Wetterinformationen sein - insbesondere bei Hotel-Telefonsystemen um die Gäste über das lokale Wetter zu informieren -, aktuelle Börseninformationen oder aktuelle Verkehrsinformationen. Derartige Informationen können vorzugsweise vom Informationsserver von Internet-Servern extrahiert werden und einem Telefon durch den Kommunikationsserver auf Anfrage durch die erste Übertragung, mittels der zweiten Übertragung übermittelt werden.

Es kann vorzugsweise eine Anzahl von Informationsseiten vorausgewählt werden, so dass nicht beliebige Internet-Webseiten abgefragt werden können, sondern nur aus den vor-ausgewählten Webseiten eine selektiert werden kann. Das hat den Vorteil, dass das Kommunikationssystem nicht für beliebige Internet-Abfragen missbraucht werden kann und dass die Informationen aufgrund der Beschränkung bereits im Informationsserver zwischengespeichert werden können, so dass eine Abfrage der Information nur eine Abfrage bei einem vorzugsweise im lokalen Netzwerk oder einem abgegrenzten Intranet angeordneten Server - insbesondere dem Informationsserver oder dem Kommunikationsserver - nach sich zieht und keinen Zugriff ins Internet. Der Datenverkehr beschränkt sich dann vorzugsweise in einem abgegrenzten Intranet.

Der erfindungsgemäße Kommunikationsserver ist vorzugsweise eine private Vermittlungsanlage - häufig als PBX (Private Branch Exchange) bezeichnet - oder ein Server, der verschiedene Kommunikationsdienste bereitstellt, insbesondere Sprachdienste für beim Server registrierte Telefon-Endgeräte. Darunter ist auch ein so genannter Soft-Switch für so genannte Voice-Over-IP-Übertragungen zu verstehen, beispielsweise das Produkt HiPath 8000 der Siemens AG. Vorzugsweise können Übertragungen - insbesondere die erfindungsgemäße erste oder zweite Übertragung - zwischen Kommunikationsserver und Telefon auf paketorientierten oder alternativ leitungsgebundenen Verfahren beruhen. Im Fall von paketorientierten Verfahren kann die Übertragung beispielsweise auf das von der IETF (Internet Engineering Task Force) vorgeschlagene SIP-Protokoll (SIP: Session Initiation Protocol) und den zugehörigen Protokollen SDP (Session Description Protocol) sowie RTP (Realtime Transport Protocol) beruhen.

Die erfindungsgemäße Identifikationsinformation kann in einer vorteilhaften Ausgestaltung eine Dienst-Rufnummer sein. Für jeden erfindungsgemäßen Dienst kann dabei vorzugsweise eine eigene eindeutige Dienst-Rufnummer vergeben werden. Im Kommunikationsserver kann vorzugsweise für jede Dienst-Rufnummer eine Behandlung für von Telefonen gewählten Dienst-Rufnummern implementiert sein, so dass nach Wahl der Dienst-Rufnummer und der daraus resultierenden ersten Übertragung die beim Kommunikationsserver eingehende erste Übertragung erkannt wird und die weiteren Schritte des erfindungsgemäßen Verfahrens für den gewünschten Dienst durchgeführt werden.

Anstatt des Wählens einer Dienst-Rufnummer können alternativ auch andere Informationen in der ersten Übertragung als Identifikationsinformation übermittelt werden, beispielsweise ein eindeutiger Bezeichner - also eine so genannte ID - einer am Telefon gedrückten Taste oder ein eindeutiger Bezeichner, der den gewünschten Dienst spezifiziert.

Das Verfahren zum Bereitstellen eines Dienstes kann im Ruhezustand eines Telefons durchgeführt werden, jedoch auch im Gesprächs-, im Rufzustand oder im Zustand der Signalisierung eines eingehenden Rufs. In den letztgenannten Möglichkeiten außerhalb des Ruhezustands kann es vorteilhaft sein zur Bereitstellung von kontextsensitiven Diensten den Zustand des Rufaufbaus und/oder die Rufnummer mindestens eines der Kommunikationspartner als Teil der Identifikationsinformation zu übermitteln - zum Beispiel eine so genannte "Calling Party Number" oder eine "Called Party Number" -, so dass zum Beispiel ein Dienst denkbar ist, der Information abhängig vom gerade aktiven Gesprächspartner ermittelt und am Telefon ausgibt. Beispielsweise kann es sinnvoll sein, neben dem Namen des Kommunikationspartners weitere Informationen des Kommunikationspartners mittels des Dienstes abzufragen und anzuzeigen. Insbesondere können dies Informationen sein, wie sie üblicherweise bei so genannten Call Centern ermittelt und angezeigt werden, wie eine Kundennummer oder eine postalische Adresse des Kommunikationspartners. Alternativ können beispielsweise auch Informationen zur Firma des Kommunikationspartners ermittelt und angezeigt werden - der Sitz der Firma, Umsatzzahlen, Informationen zu Produkten und das Produktportfolio der Firma, etc. -, die vorab oder aufgrund der ersten Übertragung von einem Server im Internet extrahiert worden sind.

Die Rufnummer als Teil der Identifikationsinformation lässt sich vorzugsweise aus einer bekannten für eine Anzeige vorgesehene Rufnummernübermittlung - häufig CLIP (Calling Line Identification Presentation) genannt - während der Rufinitiierung extrahieren.

Erfindungsgemäß wird durch den Informationsserver ein der Identifikationsinformation zugeordneter Datensatz ermittelt. Darunter kann in einer ersten Ausgestaltung verstanden werden, dass bereits vorab, zeitlich vor der Benutzeraktion, Datensätze generiert wurden und einer der vorab generierten Datensätze bei Eingang der ersten Übertragung lediglich bestimmt und ausgelesen wird. Zur Speicherung der Datensätze kann vorzugsweise eine Datenbank im Informationsserver vorhanden sein. Die Datensätze können in dieser Ausgestaltung eventuell derart erzeugt oder aktualisiert worden sein, dass in periodischen Abständen Abfragen beim Server im Internet abgesetzt werden und Daten der Rückantwort vom Server in jeweilige lokale Datensätze übertragen und somit aktualisiert werden.

In einer zweiten alternativen oder zusätzlichen Ausgestaltung, kann der Datensatz temporär im Informationsserver erstellt werden, indem erst bei Eingang der ersten Übertragung eine Abfrage zu einem Server im Internet abgesetzt wird und basierend auf der Rückantwort ein temporärer Datensatz mit wesentlichen Daten der Rückantwort erstellt wird, der dann die Grundlage für die zweite Übertragung bildet.

Es ist weiterhin zu beachten, dass Funktionen des Informationsservers auch in den Kommunikationsserver oder einen anderen Server integriert werden könnten.

Die erfindungsgemäße Überwachung auf beim Telefon eingehenden von zu einer von einer Sprachverbindung unabhängigen zweiten Übertragung zugehörigen Daten kann vorzugsweise so erfolgen, dass eine bestimmte feste oder konfigurierbare logische Adresse - häufig als Port oder TCP-Port (TCP: Transmission Control Protocol) bezeichnet - der Schnittstelle des Telefons für den Eingang der zweiten Übertragung definiert wird und diese logische Adresse bezüglich eines Eintreff-Ereignisses der zweiten Übertragung durch das Telefon überwacht wird, insbesondere mittels eines so genannten Port-Listeners oder Event-Listeners. Durch diese Überwachung braucht ein bestehendes Protokoll zwischen Telefon und Kommunikationsserver nicht für das erfindungsgemäße Verfahren angepasst werden, da die zweite Übertragung nicht in das bestehende Protokoll für die erste Übertragung eingebettet wird, sondern parallel zu eventuell ebenfalls zeitgleich ablaufenden Übertragungen erfolgen kann. Eine derartige Vorgehensweise ist insbesondere bei paketvermittelter Übertragung auf IPbasierter (IP: Internet Protocol) Technologie einfach umzusetzen, da es dort üblich ist für bestimmte Übertragungen bestimmte Ports vorzusehen.

Die vorliegende Erfindung und deren Weiterbildungen werden nachfolgend im Rahmen eines Ausführungsbeispiels an Hand von Figuren näher erläutert.

Dabei zeigen in schematischer Darstellung
- Figur 1: ein Kommunikationssystem zur Bereitstellung eines Dienstes und die dafür im Kommunikationssystem auftretenden Meldungen, Übertragungen und Verbindungen,
- Figur 2: ein Prinzipschaubild eines erfindungsgemäßen Telefons.

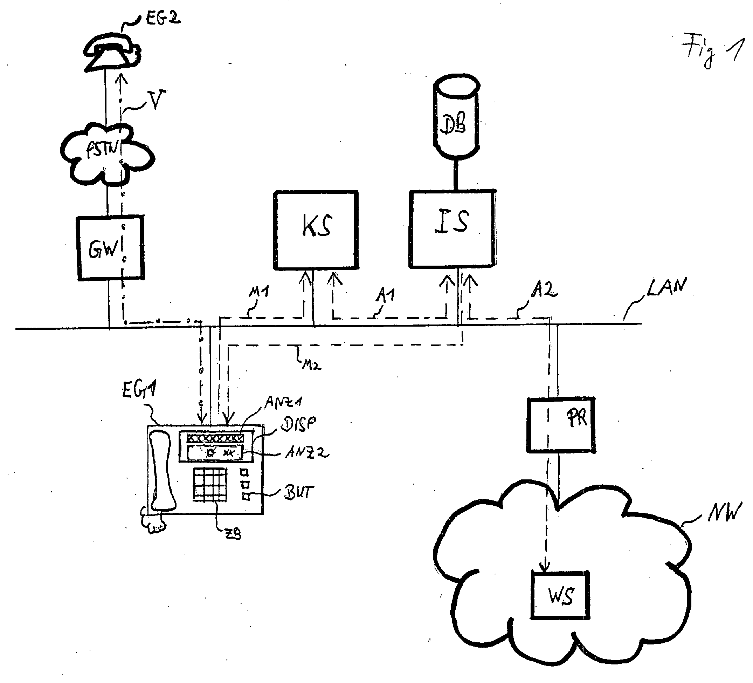

In Figur 1 ist in schematischer Darstellung ein Kommunikationssystem dargestellt, bei dem wesentliche Komponenten in einem lokalen Netzwerk LAN angeordnet sind. Dies sind ein erstes Telefon EG1 als erfindungsgemäßes Telefon, ein Kommunikationsserver KS, ein Informationsserver IS, eine Datenbank DB, ein Gateway GW und ein Proxy-Rechner PR. Beim Kommunikationsserver KS sind eine Vielzahl von im lokalen Netzwerk LAN angeordneten Endgeräten konfiguriert und registriert, insbesondere auch das erste Telefon EG1. Es sei angenommen, dass der Kommunikationsserver KS auf IP-basierte Kommunikationsmittel zurückgreift und seine Dienste den Endgeräten ebenfalls mittels IP-Mitteln bereitstellt. Weiterhin sei angenommen, dass die Endgeräte und das erste Telefon EG1 IP-basierte Endeinrichtungen sind. Somit erfolgt die Kommunikation zwischen den Endeinrichtungen, dem ersten Telefon EG1, dem Kommunikationsserver KS und den weiteren vorstehend genannten Einrichtungen durchwegs über das lokale Netzwerk LAN unter Verwendung von IP-basierten Mitteln.

Für das erste Telefon EG1 ist in Figur 1 weiterhin schematisch eine Anzeigeeinheit DISP, mindestens eine Funktionstaste BUT und ein Wählziffernblock ZB angedeutet. Weiterhin sei im Beispiel angenommen, dass die Anzeigeeinheit DISP in verschiedene Unterbereiche strukturiert sein kann, insbesondere in einen ersten Anzeigebereich ANZ1 und einen zweiten Anzeigebereich ANZ2. Die Anzeigenbereiche ANZ1 und ANZ2 können dabei zur Darstellung von reinem Text vorgesehen sein und z.B. als reines LC-Display (LC: liquid crystal) ausgestaltet sein, aber je nach Möglichkeiten des bedienten ersten Telefons EG1 auch insbesondere eine grafische Ausgabe ermöglichen. Letztgenanntes ist insbesondere bei Verwendung eines so genannten TFT-Displays (TFT: thin-film transistor) möglich, mittels dem jegliche Form von Inhalten ausgegeben werden können, wie dies ansonsten bei auf Arbeitsplatzrechnern dargestellten Web-Seiten üblich ist.

Der Informationsserver IS ist insbesondere dazu vorgesehen, Daten in die Datenbank DB zu schreiben und aus dieser zu lesen. Weiterhin kann der Informationsserver IS die in der Datenbank DB gespeicherten Daten einem weiteren im lokalen Netzwerk LAN angeordneten Server, insbesondere dem Kommunikationsserver KS, mittels Abfrageschnittstelle zur Verfügung stellen oder dies direkt an das erste Telefon EG1 übermitteln.

Für eine Ankopplung an ein Telefonnetz - im Ausführungsbeispiel das öffentliche Fernsprechnetz PSTN - ist der Gateway GW vorgesehen. Dieser Gateway GW erlaubt eine Konvertierung von paketorientierten Sprachpaketen im Rahmen einer Telefonverbindung in leitungsgebundene Sprachverbindungsdaten.

Weiterhin ist in Figur 1 ein zweites Telefon EG2 dargestellt, das leitungsbasierte Kommunikationsmittel verwendet und an das öffentliche Fernsprechnetz PSTN gekoppelt ist und über das öffentliche Fernsprechnetz PSTN und den Gateway GW mit dem ersten Telefon EG1 verbindbar ist.

Eine weitere Komponente des lokalen Netzwerks LAN ist der Proxy-Rechner PR, der einen Übergang vom abgeschlossenen lokalen Netzwerk LAN zu einem übergreifenden Datennetzwerk NW bereitstellt. Im Proxy-Rechner PR oder zusätzlich kann dabei eine so genannte Firewall angeordnet sein, die das lokale Netzwerk LAN vor unbefugten Zugriff über das übergreifenden Datennetzwerk NW schützt. Das übergreifende Datennetzwerk NW sei dabei vorzugsweise das globale Internet. Im übergreifenden Datennetzwerk NW ist in Figur 1 auf schematische Weise ein Web-Server WS angedeutet, der vorzugsweise Internetinhalte für auf Arbeitsplatzrechnern ablaufenden Clients bereitstellt, beispielsweise mittels Web-Seiten. Es sei angenommen, dass der Web-Server WS zumindest Daten bereitstellen kann, die von einem anderen Rechner abgefragt werden können. Über welches Protokoll eine Abfrage erfolgt und auf welche Weise der Web-Server WS die Daten bereitstellt, ist dabei für die Erfindung nicht wesentlich und wird nicht weiter diskutiert.

Neben den vorstehend bezeichneten Komponenten, die durchwegs mit kontinuierlichen Linien darstellt sind und deren Verbindungen untereinander, die ebenfalls mit kontinuierlichen Linien dargestellt sind, sind in Figur 1 auch Meldungen und Übertragungen innerhalb des Kommunikationssystems angedeutet. Diese Meldungen und Übertragungen sind dabei als strichlierte Pfeile oder als Strich-Punkt-Pfeile veranschaulicht. Bei den Übertragungen und Meldungen handelt es sich um die erste Übertragung M1 zwischen dem ersten Telefon EG1 und dem Kommunikationsserver KS sowie der zweiten Übertragung M2 vom Informationsserver IS zum ersten Telefon EG1. Weiterhin ist eine erste Abfrageverbindung A1 zwischen den Kommunikationsserver KS und dem Informationsserver IS angedeutet, sowie eine zweite Abfrageverbindung A2 vom Informationsserver IS über den Proxy-Rechner PR zum Web-Server WS. Ferner ist in Figur 1 eine Sprachverbindung V zwischen dem ersten Telefon EG1 und dem zweiten Telefon EG2 dargestellt. Details zu den Meldungen werden im Folgenden im Rahmen der Erläuterung des Ausführungsbeispiels erklärt.

In einer ersten Ausführungsvariante wird das Verfahren zum Bereitstellen eines Dienstes am ersten Telefon EG1 derart umgesetzt, dass unter einem Dienst hierbei insbesondere ein Dienst zu verstehen ist, der nicht originär für ein Telefon verfügbar ist oder für ein Telefon angeboten wird, und der nicht mit einer Sprachverbindung, einem Leistungsmerkmal oder mit einer Konfigurierung des Telefons in Beziehung steht. Bei dem Dienst soll es sich lediglich bzw. im Wesentlichen um eine Möglichkeit zur Darstellung von Informationen am üblicherweise für die Anzeige von Telefonfunktionen vorgesehenen Display DISP des ersten Telefons EG1 handeln. Als Dienst kann beispielsweise die Ausgabe eines Nachrichten- / Börsentickers oder einer Börseninformation verstanden werden, wobei diese Information üblicherweise für die Ausgabe an einem Arbeitsplatzrechner vorgesehen ist.

Ausgangssituation sei, dass das erste Telefon EG1 sich in einem Ruhezustand befindet. Weiterhin sei angenommen, dass durch den Informationsserver IS bereits mehrere Datensätze in die Datenbank DB geschrieben wurden und diese in regelmäßigen Abständen aktualisiert werden, und weitgehend permanent für eine lokale Abfrage zur Verfügung stehen. Die in der Datenbank DB abgelegten Daten werden dabei vom Informationsserver IS mittels der zweiten Abfrageverbindung A2 vom im Internet befindlichen Web-Server WS abgefragt. Beispielsweise sei ein derartiger in der Datenbank DB abgelegter Datensatz eine Information bezüglich des lokalen Wetters des Standorts, an dem sich das erste Telefon EG1 befindet. Alternativ können auch Börseninformationen in der Datenbank DB abgelegt sein. Beliebige Datensätze sind denkbar, werden aber im Rahmen des Ausführungsbeispiels nicht näher erläutert. Insbesondere soll es sich bei den Datensätzen um reine Informationsdaten handeln, die keinen Bezug zum Kommunikationsserver, zu den Endgeräten oder zu Kommunikationsverbindungen aufweisen. Das Speicherformat der Datensätze ist ebenfalls beliebig. Es kann sich beispielsweise um gespeicherten unformatierten reinen Text handeln, um strukturierte Datensätze z.B. im XML-Format (XML: Extensible Markup Language) oder aber bereits um vorformatierte Informationen, wie sie HTML-Seiten (HTML: Hyper Text Markup Language) bereitstellen.

Der Kommunikationsserver KS sei weiterhin derart konfiguriert, dass verschiedene Service-Rufnummern vorgesehen sind, um die verschiedenen Datensätze aus der Datenbank DB abzufragen. Beispielsweise sei die Rufnummer 4700 zur Abfrage von Wetterinformationen vorgesehen. Darüber hinaus sei im vorliegenden Ausführungsbeispiel die Rufnummer 4701 für die Ausgabe von Aktienkursen und Börseninformationen definiert. Zum Initiieren des erfindungsgemäßen Verfahrens wird nun angenommen dass ein Benutzer die Rufnummer 4701 am Wählziffernblock ZB des ersten Telefons EG1 wählt, mit dem Ziel Börseninformationen an der Anzeigeeinheit DISP angezeigt zu bekommen. Das Absetzen der Rufnummer 4701 entspricht dabei einer erfindungsgemäßen Benutzeraktion. Die eingegebene Ziffernfolge wird am ersten Telefon EG1 erfasst, wodurch durch das erste Telefon EG1 an den Kommunikationsserver KS die erste Übertragung M1 ausgelöst wird. Bei der ersten Übertragung M1 kann es sich um eine bekannte RufaufbauSignalisierung handeln, die üblicherweise nach Absetzen einer eingegebenen Rufnummer ausgelöst wird. Dies wird in diesem Fall dafür ausgenutzt, dass der Kommunikationsserver KS darüber informiert wird, dass ein Dienst am ersten Telefon EG1 bereitgestellt werden soll. Weiterhin wird neben der ersten Übertragung M1 aufgrund der eingegebenen Ziffernfolge 4701 am ersten Telefon EG1 ein Event-Listener gestartet, der eine Überwachung auf die beim ersten Telefon EG1 eingehende zweite Übertragung M2 auslöst. Die zweite Übertragung M2 ist dabei dazu vorgesehen, ermittelte Daten zum Bereitstellen des Dienstes an das erste Telefon EG1 zu übermitteln, damit sie dort ausgegeben werden.

Geht nun die erste Übertragung M1 entsprechend einer Rufaufbausignalisierung beim Kommunikationsserver KS ein, so erkennt der Kommunikationsserver KS aufgrund der gewählten Rufnummer 4701, dass es sich bei der ersten Übertragung M1 nicht um eine reguläre Rufaufbausignalisierung handelt, sondern um einen Aufruf zum Bereitstellen eines Dienstes zur Ausgabe am ersten Telefons EG1. Die Rufnummer 4701 wird durch den Kommunikationsserver KS als erfindungsgemäße Identifikationsinformation aus der ersten Übertragung M1 extrahiert. Mit oder aufgrund dieser Identifikationsinformation wird daraufhin eine erste Abfrageverbindung A1 zum Informationsserver IS abgesetzt um einen der Identifikationsinformation zugeordneten Datensatz in der Datenbank DB auszulesen. Mittels der Rufnummer 4701 oder einer aus dieser Rufnummer abgeleiteten weiteren Information werden nun durch den Informationsserver IS ein oder mehrere zugeordnete Datensätze ermittelt. Der oder die ermittelten Datensätze werden daraufhin über die erste Abfrageverbindung A1 vom Informationsserver IS zurück an den Kommunikationsserver KS übertragen. Daraufhin werden durch den Informationsserver IS, nach eventueller Nachbearbeitung, die Daten über die zweite Übertragung M2 an das erste Telefon EG1 übermittelt. Die Daten sind dabei die lediglich für eine Anzeige am ersten Telefon EG1 vorgesehenen Börseninformationen.

Eine direkte Übermittlung durch die Übertragung M2 vom Informationsserver IS ans erste Telefon EG1, wie im vorliegenden Ausführungsbeispiel beschrieben, kann alternativ auch dadurch ersetzt werden, dass der Informationsserver IS erst eine Antwort an den Kommunikationsservers KS sendet mit im wesentlichen denselben Informationen wie in der Übertragung M2, und der Kommunikationsserver KS diese Informationen an das ersten Telefon EG1 weiterleitet. Dies ändert jedoch nichts am Grundkonzept der Erfindung, so dass diese Variante im vorliegenden Ausführungsbeispiel nicht weiter beleuchtet wird. Jedoch ist einem Fachmann klar, dass je nach Ausgestaltung der beteiligten Server und Endgeräte eine direkte Verbindung vorteilhaft sein kann, insbesondere wenn das erste Telefon EG1 und der Informationsserver IS beide über TCP (Transmission Control Protocol) an dasselbe Datennetzwerk - hier dem lokalen Netzwerk LAN - angebunden sind. In anderen Szenarien - beispielsweise wenn das erste Telefon EG1 mit dem Informationsserver IS keine übereinstimmende Kommunikationsprotokolle implementiert - mag aber ein "Umweg" der Übermittlung der Daten vom Informationsserver IS über den Kommunikationsserver KS und dann zum ersten Telefon EG1 sinnvoll sein. Diese Vorgehensweise ist aber nicht in Figur 1 dargestellt.

Aufgrund der vorher gestarteten Überwachung beim ersten Telefon EG1 mittels des Event-Listeners wird der über einen so genannten Port des ersten Telefons EG1 verlaufende Eingang der über die zweite Übertragung M2 übermittelten Daten am ersten Telefon EG1 erkannt. Die eingehenden Daten werden durch das erste Telefon EG1 erfasst, gesammelt und nach eventuell nötiger Konvertierung in ein unterstütztes Ausgabeformat an der Anzeigeeinheit DISP ausgegeben. Die Ausgabe erfolgt dabei insbesondere im zweiten Anzeigebereich ANZ2, wobei der erste Anzeigebereich ANZ1 vorzugsweise weiterhin für reine Telefoniefunktionen und reine Telefonieausgaben reserviert bleibt, so dass jegliche Funktionen, die die primären Funktionen eines Telefon betreffen, nicht nachteilig berührt sind.

Um eine Anpassung der Daten an die Ausgabemöglichkeiten der Anzeigeeinheit DISP durchzuführen, kann eine Konvertierung der gespeicherten Daten im Informationsserver IS und/oder im ersten Telefon EG1 vorgesehen sein. Die Ausgabe kann dabei rein textuell oder auch basierend auf graphischer Mittel umgesetzt werden. Vorzugsweise kann die Übertragung der Daten als zweite Übertragung M2 in Form von HTML oder XML oder jedem beliebigen anderen Datenformat erfolgen, insbesondere wenn die derart übermittelten Daten auf einfache Art und Weise ausgegeben oder in ein ausgebbares Format umgesetzt werden können.

Unter ausgebbarem Format sind auch Dateiformate mit Multimedia-Inhalten zu verstehen, wie das proprietäre Flash-Format. Weiterhin können reine Grafik-Formate als Ausgabe denkbar sein. Außerdem kann möglicherweise vorgesehen sein, in der Ausgabe auch Eingabemöglichkeiten vorzusehen, wie dies beispielsweise im HTML-Format möglich ist, bei dem Eingabefelder, aktivierbare Verweise oder Schaltknöpfe in der Ausgabe eingebettet sein können.

Eine Aufbereitung der auszugebenen Daten an die Fähigkeiten eines spezifischen Endgerätes kann dabei bereits in einem Server - bespielsweise im Informationsserver IS oder im Kommunikationsserver KS - umgesetzt werden. Alternativ können je Endgerätetyp in der Datenbank DB spezifische Datensätze gespeichert sein, die semantisch zwar den gleichen Inhalt aufweisen, jedoch bereits an die Ausgabemöglichkeiten des jeweiligen Endgeräts angepasst sind. Eine weitere Alternative ist, die zweite Übertragung M2 in einem generischen Format durchzuführen und dass das empfangene erste Telefon EG1 die eventuell nötigen Formatanpassungen, ein so genanntes Rendering und/oder eine Visualisierung durchführt und auf der Anzeigeeinheit DISP ausgabefähige Daten erzeugt. Je nach Fähigkeiten des ersten Telefons EG1, mag das Auslösen von so genannten Display Update Events und ein Rendering nötig sein, um eine grafische Darstellung von Informationen zu ermöglichen.

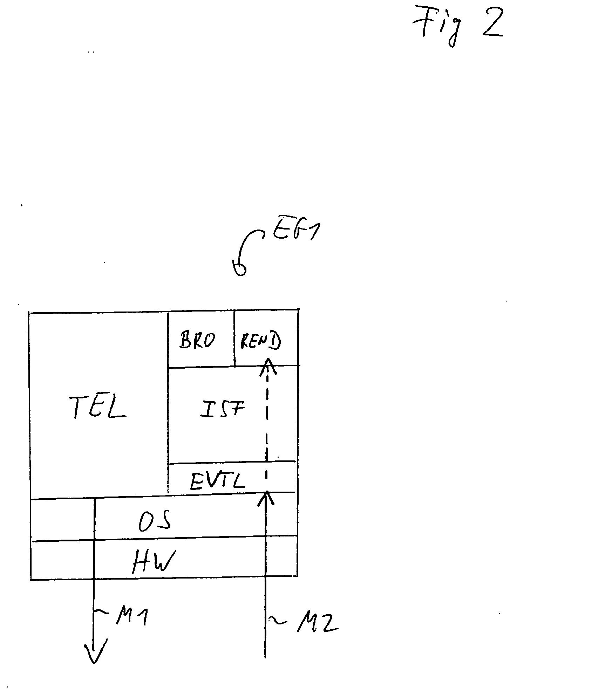

Das Verarbeiten von Events aufgrund der eingehenden zweiten Übertragung M2, das Verarbeiten dieser zweiten Übertragung M2, das Aufbereiten für eine grafische Ausgabe der in der zweiten Übertragung M2 enthaltenen Daten und das initiieren von Display-Update-Events zur Benachrichtigung einer Rendering-Engine des Telefons, kann dabei von einer integralen Komponente des Telefons, dem Information Service Framework, durchgeführt werden, siehe auch Figur 2.

Das erläuterte Verfahren ist insofern vorteilhaft, als dass aufgrund der Umsetzung mit einer Überwachung auf beim ersten Telefon EG1 eingehenden Daten der zweiten Übertragung M2 das erste Telefon EG1 während dem Verfahrensablauf trotzdem für ein- und ausgehende Telefonate ohne Einschränkung zur Verfügung steht. Eine Blockierung des ersten Telefons EG1 findet nicht statt.

Als erfindungsgemäße Identifikationsinformation ist im vorhergehenden Beispiel lediglich die Rufnummer des Dienstes 4701 vorgesehen. Dies kann jedoch erweitert werden, indem zusätzliche Parameter zusätzlich zu der Dienstrufnummer als Identifikationsinformation übermittelt werden. Beispielsweise könnte im Beispiel einer Börseninformation eine zusätzliche Wertpapierkennnummer übertragen oder ermittelt werden, so dass lediglich der relevante Kurs angezeigt wird. In diesem Fall könnte die Identifikationsinformation die Dienstrufnummer als auch einen zusätzlichen Signalisierungsparameter umfassen.

Im Folgenden wird in einer zweiten Variante weiterhin anhand Figur 1 erläutert, wie ein Bereitstellen eines Dienstes am ersten Telefon EG1 erfolgen kann, wenn eine aktive Gesprächsverbindung zu einem weiteren Telefon - im vorliegenden Fall das zweite Telefon EG2 - vorliegt.

Ausgangssituation für das zweite Ausführungsbeispiel sei, dass bereits eine Sprachverbindung V zwischen dem zweiten Telefon EG2 und dem ersten Telefon EG1 aufgebaut ist. Im ersten Anzeigebereich ANZ1 der Anzeigeeinheit DISP sei deshalb beispielsweise bereits die Rufnummer des zweiten Telefons EG2 und weitere relevante Verbindungsdaten textuell angezeigt.

Ferner sei das Kommunikationssystem so konfiguriert, dass weitergehende Informationen bezüglich bestimmten konfigurierten Telefonnummern vom Kommunikationsserver KS bzw. vom Informationsserver IS abgefragt werden können, wenn an einem jeweiligen Endgerät wie dem ersten Telefon EG1 eine dafür vorgesehene Funktionstaste BUT gedrückt wird. Derartige zusätzliche Informationen, die einer Rufnummer zugeordnet sein können, können beispielsweise Informationen zur Firma des Angerufenen sein beispielsweise der Firmensitz, die Kontaktadressen oder Informationen bezüglich der Firmengröße, dem Umsatz der Firma etc. Alternativ können derartige Informationen insbesondere in einem Kundenverhältnis auch Informationen wie eine Kundennummer oder Informationen zu bisher getätigten Aufträgen sein.

Es sei angenommen, dass ein Benutzer des ersten Telefons EG1 nun während der aufgebauten Sprachverbindung V zusätzliche Informationen in der Anzeigeeinheit DISP des ersten Telefons EG1 angezeigt bekommen möchte. Diese Informationen sollen den Benutzer des zweiten Telefons EG2 betreffen, wie die vorstehend genannten Informationen zur Firma des Kommunikationspartners. Deshalb wird durch den Benutzer des ersten Telefons EG1 die dafür vorgesehene und entsprechend konfigurierte Funktionstaste BUT gedrückt. Diese Benutzeraktion wird am ersten Telefon EG1 erfasst, woraufhin die erste Übertragung M1 durch das erste Telefon EG1 initiiert wird. Diese erste Übertragung M1 ist dabei an den für das erste Telefon EG1 konfigurierten Kommunikationsserver KS gerichtet. Weiterhin wird eine Überwachung bezüglich einer eingehenden von der aktiven Sprachverbindung V unabhängigen zweiten Übertragung M2 aktiviert, die über einen konfigurierten TCP-Port (TCP: Transmission Control Protocol) beim ersten Telefon EG1 eingehen wird. Die zweite Übertragung M2 und deren Inhalte werden dabei mit den folgenden Verfahrensschritten generiert.

Als erfindungsgemäße Identifikationsinformation der ersten Übertragung ist in der vorliegenden Ausführungsvariante beispielsweise angegeben, um welche Tastenfunktion es sich für die gedrückte Funktionstaste BUT handelt und für welche Rufnummer des zweiten Telefons EG2 die zusätzlichen Daten ermittelt werden sollen, wobei die Rufnummer des zweiten Telefons EG2 in aktuellen Verbindungsdaten im Kommunikationsserver KS oder im ersten Telefon EG1 als so genannte "Called Party Number" oder "Calling Party Number" gespeichert sein können oder aus einem zur Sprachverbindung V zugehörigen Signalisierungsverkehr extrahiert werden kann. Bei Eingehen der ersten Übertragung M1 beim Kommunikationsserver KS wird insbesondere diese Identifikationsinformation aus der ersten Übertragung M1 bzw. aus Speicherhinhalten des Kommunikationsservers KS durch den Kommunikationsserver KS extrahiert.

Für diese Identifikationsinformation wird daraufhin ein zu dieser zugeordnet gespeicherter Datensatz ermittelt, der durch den Informationsserver IS bereitgestellt wird. Die Anfrage zum Informationsserver IS bzw. die Bereitstellung des Inhalts des ermittelten Datensatzes erfolgt dabei über die erste Abfrageverbindung A1 zwischen dem Kommunikationsserver KS und dem Informationsserver IS.

Der zu ermittelnde Datensatz kann wie im vorhergehenden Beispiel bereits vorab in der Datenbank DB generiert und gespeichert sein. Alternativ und im Folgenden weiter ausgeführt, kann eine im Verfahrensablauf eingebettete Abfrage bei einem Internet-Web-Server WS in das Verfahren integriert sein. Die Abfrage beim Web-Server WS erfolgt somit erst bei Bedarf, was häufig auch als "on demand" bezeichnet wird. Dies ist insbesondere bei schnellen LAN- (LAN: Local Area Network) und/oder Internet-Verbindungen möglich, wodurch vorteilhafterweise immer hoch aktuelle Daten ermittelt werden können. Weiterhin ist vorteilhaft, dass auf eine lokale Datenbank DB eventuell verzichtet werden kann.

Aufgrund der eingehenden ersten Abfrageverbindung A1 wird durch den Informationsserver IS eine Abfrage beim Web-Server WS generiert. Diese Abfrage wird über die zweite Abfrageverbindung A2 über den Proxy-Rechner PR und dem übergreifenden Datennetzwerk NW an den im Internet angeordneten Web-Server WS abgesetzt. Dieser liefert daraufhin über die zweite Abfrageverbindung A2 eine Rückantwort mit den angeforderten Daten. Die angeforderten Daten werden vom Informationsserver IS aus der zweiten Abfrageverbindung A2 extrahiert und nach eventuell vorgesehener Format- oder Kodierungs-Konvertierung in einem temporären Datensatz zwischengespeichert. Dieser Datensatz bzw. die Daten dieses Datensatzes werden daraufhin vom Informationsserver IS über die erste Abfrageverbindung A1 an den Kommunikationsserver KS übermittelt.

Mit den vom Informationsserver IS beim Kommunikationsserver KS empfangenen Daten wird daraufhin durch den Informationsserver IS die zweite Übertragung M2 an das erste Telefon EG1 generiert, wobei dabei die zweite Übertragung M2 an den vorher konfigurierten TCP-Port des ersten Telefons EG1 gerichtet wird. Die zweite Übertragung M2 umfasst dabei insbesondere die vom Web-Server WS ermittelten Daten, die für eine Anzeige am ersten Telefon EG1 vorgesehen sind. Aufgrund der vorab aktivierten Überwachung des konfigurierten TCP-Ports, wird der Eingang der zweiten Übertragung M2 durch das erste Telefon EG1 erkannt. Die Daten werden aus der zweiten Übertragung M2 extrahiert, eventuell gemäß den Möglichkeiten der Anzeigeeinheit DISP konvertiert und im zweiten Anzeigebereich ANZ2 der Anzeigeeinheit DISP ausgegeben.

Somit können während einer bestehenden Sprachverbindung V zusätzliche Daten als Dienst angezeigt werden, die ursprünglich für eine Sprachverbindung nicht vorliegen. Die auszugebenden Daten sind dabei im Wesentlichen unabhängig von der bestehenden Sprachverbindung V. Lediglich die Rufnummerninformation wurde aus der bestehenden Sprachverbindung V extrahiert und stellt den einzigen Bezug zur Sprachverbindung V dar. Dabei ist es für die Anzeige im zweiten Anzeigebereich ANZ2 irrelevant, in welchem Zustand sich die Sprachverbindung V aktuell befindet. Sie kann auch im Unterschied zur bisherigen Erläuterung beispielsweise sich noch im Rufaufbau befinden oder im Rahmen einer Konferenzschaltung aufgebaut sein. Auch kann die Darstellung im zweiten Anzeigebereich ANZ2 über das Ende der Sprachverbindung V hinaus angezeigt werden. Alternativ kann die Anzeige aber auch bei Beendigung der Sprachverbindung V gelöscht werden.

Das Verfahren bietet somit den Vorteil eine Gesprächsführung derart zu unterstützen, dass einem Benutzer des ersten Telefons EG1 zusätzliche nützliche Informationen angezeigt werden können, die ihn bei der Gesprächsführung in semantischer Hinsicht unterstützen können.

Die dargestellten Verfahren haben weiterhin insbesondere den Vorteil, dass von einem Telefon - hier das erste Telefon EG1 - eine Kommunikationsverbindung aufgebaut werden kann, die als sichtbares Ergebnis auf dem Display des Telefons für einen Benutzer im wesentlichen wie ein Browser auf einem Arbeitsplatzrechner aussieht und sich im wesentlichen auch so verhält, ohne dass tatsächlich eine Internet-Verbindung vom betroffenen ersten Telefon EG1 aufgebaut wird. Einerseits können die möglichen Zugriffe ins Internet beschränkt werden, um Missbrauch zu verhindern. Andererseits ist durch das erfindungsgemäße Verfahren ein erhöhtes Maß an Sicherheit gegeben, da beispielsweise ein Virenschutz nicht an jedem Endgerät oder Telefon wie dem ersten Telefon EG1 bereitgestellt werden muss, sondern dies zentral im Proxy-Rechner PR oder im Informationsserver IS durchgeführt werden kann. Eventuell kann sogar auf einen Virenschutz im Kommunikationssystem verzichtet werden, da in gewissen Ausprägungen der Erfindung ohnehin eine Extraktion der Daten des Web-Servers WS erfolgt und die Daten nicht direkt in einem so genannten Browser verarbeitet und angezeigt werden. Darüber hinaus kann das lokale Netzwerk LAN und darin angeordnete Server so konfiguriert werden, dass direkte Verbindungen von beliebigen Adressen aus dem Internet nicht zu den Endgeräten und Telefonen weitergeleitet werden, da eine Beschränkung auf Datenübermittlungen, die vom Informationsserver IS ausgehen, möglich ist.

Es sei weiterhin angemerkt, dass unter dem Begriff Telefon im weitesten Sinne auch eine Telefonfunktion zu verstehen ist, die auf einem Arbeitsplatzrechner abläuft, also ein so genannter Soft-Client.

Ein weiterer Vorteil der Erfindung ist, dass Arbeitsplätze oder Räume, die nur ein Telefon aufweisen aber keine PC (personal computer), Zugriff auf web-basierte Information bekommen, die darüber hinaus immer aktuell gehalten werden. Weiterhin ist vorteilhaft, dass der Informationsserver IS wie ein so genannter Secure Gateway wirkt, so dass Hackerangriffe nicht gegenüber dem ersten Telefon EG1 ausgelöst werden, sondern lediglich Angriffe auf den Informationsserver IS möglich sind, da nur dieser im Internet bekannt ist. Eine zentrale Komponente wie der Informationsserver IS ist weiterhin leichter mit Schutz-Software zu schützen, als eine Vielzahl von verteilt angeordneten Telefonen.

In Figur 2 sind in schematischer Darstellung wesentliche Komponenten einer erfindungsgemäßen Kommunikationseinrichtung wie dem ersten Telefon EG1 aus Figur 1 dargestellt. Aufbauend auf einer Telefon-Hardware HW befindet sich ein Betriebssystem OS - beispielsweise Linux oder ein proprietäres Betriebssystem -, das für verschiedene weitere Komponenten die entsprechenden Schnittstellen anbietet. Eine dieser Komponenten ist eine so genannte Telephony-Einheit TEL, die die eigentlichen Telefonfunktionen durchführt, wie das Absetzen der ersten Übertragung M1 und das Durchführen von Telefon-Gesprächen.

Weiterhin setzt auf das Betriebssystem OS ein so genannter Event Listener EVTL auf, der Events aufgrund der eingehenden Übertragung M2 - beispielsweise eingehende HTML-, oder Flash-Übertragungen auslöst. Die Events werden durch den Information Service Framework ISF erkannt uns ausgewertet. Die mittels der Übertragung M2 eingegangenen Daten werden daraufhin durch den Information Service Framework ISF aufgearbeitet und durch Generieren von Display Update Events, die durch die Rendering Machine REND ausgewertet werden, zur Darstellung in einem im ersten Telefon EG1 integrierten Browser BRO vorzugsweise grafisch ausgegeben. Die auszugebenden Daten werden somit gerendert und auf dem im ersten Telefon EG1 integrierten Display - vorzugsweise dem zweiten Anzeigebereich ANZ2 aus Figur 1 - visualisiert.

## Patentansprüche

1. Verfahren zum Bereitstellen eines Dienstes an einem Telefon (EG1), wobei
- eine Benutzeraktion am Telefon (EG1) zum Auslösen eines von einer Sprachverbindung unabhängigen Dienstes erfasst wird,
- ausgelöst durch dieses Erfassen eine erste Übertragung (M1) durch das Telefon (EG1) an einen Kommunikationsserver (KS), zu dem das Telefon (EG1) zugeordnet ist, initiiert wird,
**dadurch gekennzeichnet, dass**
- das Telefon (EG1), der Kommunikationsserver (KS) zur privaten Vermittlung oder Bereitstellung von Sprachdiensten für bei dem Kommunikationsserver registrierte Telefone (EG1), und ein Informationsserver (IS) in einem abgegrenzten Intranet oder abgegrenzten lokalen Netzwerk (LAN) angeordnet werden,
- durch das Telefon (EG1) eine Überwachung auf beim Telefon (EG1) eingehenden Daten, die zu einer zweiten Übertragung (M2) zugehörig sind, mittels eines Port-Listeners oder eines Event-Listeners derart gestartet wird, dass die zweite Übertragung (M2) von der ersten Übertragung und von einer Sprachverbindung unabhängig ist,
- bei Eingehen der ersten Übertragung (M1) beim Kommunikationsserver (KS) durch den Kommunikationsserver (KS) eine Identifikationsinformation der ersten Übertragung (M1) ermittelt wird, aufgrunddessen ein der Identifikationsinformation zugeordneter von zumindest einem Daten-Server (WS) eines weiteren Datennetzes (NW), insbesondere des globalen Internets, oder einer lokalen Datenbank (DB) bereitzustellender Datensatz durch den Informationsserver (IS) ermittelt wird, wobei lediglich der Informationsserver (IS) in dem weiteren Datennetz (NW) bekannt wird,
- die von einer Sprachverbindung unabhängige zweite Übertragung (M2) an das Telefon (EG1) durch den Informationsserver (IS) oder den Kommunikationsserver (KS) initiiert wird, wobei die zweite Übertragung (M2) die aus dem ermittelten Datensatz lediglich für eine Anzeige am Telefon (EG1) vorgesehenen ausgelesenen Daten umfasst,
- bei Erkennen des Eingangs der Daten beim Telefon (EG1) im Rahmen der Überwachung, die Daten durch das Telefon (EG1) erfasst und ausgegeben werden.

2. Verfahren nach Anspruch 1,
**dadurch gekennzeichnet,**
**dass** ausgelöst durch das Eingehen der ersten Übertragung (M1) beim Kommunikationsserver (KS) vor der Ermittlung des Datensatzes eine Abfragemeldung (A2) zu dem mindestens einen Daten-Server (WS) vom Informationsserver (IS) abgesetzt wird und Informationen einer empfangenen Rückantwort im Datensatz gespeichert werden.

3. Verfahren nach Anspruch 1,
**dadurch gekennzeichnet,**
**dass** vor dem Eingehen der ersten Übertragung (M1) beim Kommunikationsserver (KS) eine Abfragemeldung (A2) zu dem mindestens einen Daten-Server (WS) vom Informationsserver (IS) abgesetzt wird und Informationen einer empfangenen Rückantwort in dem Datensatz gespeichert werden.

4. Verfahren nach Anspruch 1 oder 3,
**dadurch gekennzeichnet,**
**dass** vor dem Eingehen der ersten Übertragung (M1) beim Kommunikationsserver (KS) eine Mehrzahl von Abfragemeldungen (A2) zu dem mindestens einen Daten-Server (WS) vom Informationsserver (IS) abgesetzt werden und Informationen einer jeweiligen empfangenen Rückantwort in einem zur Abfragemeldung (A2) individuellen Datensatz gespeichert werden.

5. Verfahren nach einem der vorhergehenden Ansprüche,
**dadurch gekennzeichnet,**
**dass** der Daten-Server (WS) oder der mindestens eine Daten-Server (WS) als webseiten-bereitstellender Webserver im Internet ausgebildet ist.

6. Verfahren nach einem der vorhergehenden Ansprüche,
**dadurch gekennzeichnet,**
**dass** die Identifikationsinformation vom Telefon (EG1) an den Kommunikationsserver (KS) im Rahmen der ersten Übertragung (M1) übermittelt wird.

7. Verfahren nach einem der vorhergehenden Ansprüche,
**dadurch gekennzeichnet,**
**dass** als erster Bestandteil der Identifikationsinformation eine zur Adressierung für die erste Übertragung (M1) verwendete Dienst-Rufnummer des Kommunikationsservers (KS) aus der ersten Übertragung (M1) ausgelesen wird.

8. Verfahren nach einem der vorhergehenden Ansprüche,
**dadurch gekennzeichnet,**
**dass** die erste Übertragung (M1) als Signalisierung zwischen dem Telefon (EG1) und dem Kommunikationsserver (KS) durchgeführt wird und
zur Bestimmung eines zweiten Bestandteils der Identifikationsinformation ein Parameter der Signalisierung und/oder ein Protokollelement der Signalisierung ermittelt wird.

9. Verfahren nach einem der vorhergehenden Ansprüche,
**dadurch gekennzeichnet,**
**dass** bereits vor dem Initiieren der ersten Übertragung (M1) eine Sprachverbindung (V) zwischen dem Telefon (EG1) und einer weiteren Kommunikationseinrichtung (EG2) aufgebaut wird, und als dritter Bestandteil der Identifikationsinformation eine im Rahmen der Sprachverbindung (V) verwendete Rufnummer der Kommunikationseinrichtung (EG2) ermittelt wird.

10. Verfahren nach einem der vorhergehenden Ansprüche,
**dadurch gekennzeichnet,**
**dass** eine Übermittlung der ersten Übertragung (M1) und/oder der zweiten Übertragung (M2) mittels eines paketorientierten Übertragungsprotokolls erfolgt.

11. Verwendung eines Telefons (EG1) zur Durchführung des Verfahrens nach einem der vorhergehenden Verfahrensansprüche.

12. Kommunikationssystem mit einer Kommunikationseinrichtung, insbesondere einem Telefon (EG1), einem Kommunikationsserver (KS) einem Informationsserver (IS) und einem Datenserver (WS),
wobei die Kommunikationseinrichtung umfasst
- eine Telephonieeinheit (TEL) zum Durchführen einer Sprachverbindung und/oder einer ersten Übertragung (M1) im Rahmen des Auslösens eines von einer Sprachverbindung unabhängigen Dienstes an den Kommunikationsserver (KS), zu dem das Telefon (EG1) zugeordnet ist,
**gekennzeichnet durch**
- eine Anordnung des Telefons (EG1), des Kommunikationsservers (KS) zur privaten Vermittlung oder Bereitstellung von Sprachdiensten für bei dem Kommunikationsserver registrierte Telefone (EG1), und des Informationsservers (IS) in einem abgegrenzten Intranet oder abgegrenzten lokalen Netzwerk (LAN),
- eine Überwachungseinheit (EVTL) zur Überwachung auf beim Telefon (EG1) eingehenden Daten, die zu einer zweiten Übertragung (M2) zugehörig sind, mittels eines Port-Listeners oder eines Event-Listeners derart, dass die zweite Übertragung (M2) von der ersten Übertragung und von einer Sprachverbindung unabhängig ist,
- eine Verarbeitungseinheit (ISF) zum Erfassen der empfangenen zur zweiten Übertragung (M2) zugehörigen Daten und zum ausgabefähigen Umsetzen der Daten für eine Anzeigeeinheit (ANZ2) und zum Ansprechen der Anzeigeeinheit (ANZ2) zum Ausgeben der für die Anzeigeeinheit (ANZ2) umgesetzten Daten aufgrund des Ansprechens **durch** die Verarbeitungseinheit (ISF),
wobei der Kommunikationsserver (KS) dazu eingerichtet ist, bei Eingehen der ersten Übertragung (M1) eine Identifikationsinformation der ersten Übertragung (M1) zu ermitteln, eine erste Abfrageverbindung (A1) mit oder aufgrund der Identifikationsinformation zum Informationsserver (IS) abzusetzen, und die zweite Übertragung (M2) an die Kommunikationseinrichtung (EG1) durchzuführen, wobei die zweite Übertragung (M2) die aus einem vom Informationsserver (IS) ermittelten Datensatz lediglich für die Anzeigeeinheit (ANZ2) vorgesehenen ausgelesenen Daten umfasst,
wobei der Informationsserver (IS) umfasst
- eine Erkennungseinheit zum Erkennen der ersten Abfrageverbindung (A1),
- einer Ermittlungseinheit zum Ermitteln des zu der Identifikationsinformation zugeordneten Datensatzes für die Identifikationsinformation,
- eine Übermittlungseinheit zum Übertragen des Datensatzes über die erste Abfrageverbindung (A1) an den Kommunikationsserver (KS) und zum Initiieren der zweiten Übertragung (M2) an die Kommunikationseinrichtung (EG1), wobei die zweite Übertragung (M2) die aus dem ermittelten Datensatz lediglich für die Anzeigeeinheit (ANZ2) vorgesehenen ausgelesenen Daten umfasst, und
- eine Abfrageeinheit zum Bereitstellen des Datensatzes aus einer lokalen Datenbank (DB) oder **durch** Absetzen einer zweiten Abfrageverbindung (A2) zu dem mindestens einen Daten-Server (WS) eines weiteren Datennetzes (NW), insbesondere des globalen Internets, und zum Speichern von Informationen einer empfangenen Rückantwort vom Daten-Server (WS) im Datensatz, wobei lediglich der Informationsserver (IS) in dem weiteren Datennetz (NW) bekannt ist.

## Claims

1. A method for providing a service on a telephone (EG1),
wherein
- a user action on the telephone (EG1) is acquired for triggering a service that is independent of a voice connection,
- triggered by this acquisition, a first transmission (M1) is initiated through the telephone (EG1) to a communication server (KS) with which the telephone (EG1) is associated,
**characterized in that**
- the telephone (EG1), the communication server (KS), for the private conveyance or provision of voice services for the telephone (EG1) registered on the communication server, and an information server (IS) are arranged in a limited Intranet or a locally limited network (LAN),
- through the telephone (EG1), a monitoring of data received on the telephone (EG1), and associated with a second transmission (M2), is started by means of a port listener or an event listener, in such a manner that the second transmission (M2) is independent of the first transmission and of a voice connection,
- upon arrival of the first transmission (M1) on the communication server (KS), through the communication server (KS), an identification information of the first transmission (M1) is determined, on the basis of which a data set is determined by the information server (IS), data set which is associated with the identification information and which is to be provided by at least one data server (WS) of an additional data network (NW), in particular of the global Internet, or of a local databank (DB), wherein only the information server (IS) is known in the additional data network (NW) is known,
- the second transmission (M2), which is independent of a voice connection, to the telephone (EG1) is initiated through the information server (IS) or through the communication server (KS), wherein the second transmission (M2) comprises the read-out data provided from the determined data set only for a display on the telephone (EG1),
- when the arrival of the data on the telephone (EG1) is detected in the context of the monitoring, the data is acquired and output through the telephone (EG1).

2. The method according to claim 1,
**characterized in that**,
triggered by the arrival of the first transmission (M1) on the communication server (KS) before the determination of the data set, an interrogation message (A2) to the at least one data server (WS) is sent by the information server (IS), and information of a received response is stored in the data set.

3. The method according to claim 1,
**characterized in that**,
before the arrival of the first transmission (M1) on the communication server (KS), an interrogation message (A2) is sent to the at least one data server (WS) by the information server (IS), and information of a received response is stored in the data set.

4. The method according to claim 1 or 3,
**characterized in that**,
before the arrival of the first transmission (M1) on the communication server (KS), a plurality of interrogation messages (A2) is sent by the information server (IS) to the at least one data server (WS), and information of a respective received response is stored in an individual data set for the interrogation message (A2).

5. The method according to any one of the preceding claims, **characterized in that**
the data server (WS) or the at least one data server (WS) is designed as a webpage-providing web server in the Internet.

6. The method according to any one of the preceding claims, **characterized in that**
the identification information is sent by the telephone (EG1) to the communication server (KS) in the context of the first transmission (M2).

7. The method according to any one of the preceding claims, **characterized in that**,
as a first component of the identification information, a service call number of the communication server (KS), number which is used for the addressing for the first transmission (M1), is read out from the first transmission (M1).

8. The method according to any one of the preceding claims, **characterized in that**
the first transmission (M1) is carried out as a signaling between the telephone (EG1) and the communication server (KS), and,
for the determination of a second component of the identification information, a parameter of the signaling and/or a protocol element of the signaling is/are determined.

9. The method according to any one of the preceding claims, **characterized in that**,
already before the initiation of the first transmission (M1), a voice connection (V) is set up between the telephone (EG1) and an additional communication device (EG2), and, as third component of the identification information, a call number of the communication device (EG2), number which is used in the context of the voice connection (V), is determined.

10. The method according to any one of the preceding claims, **characterized in that**
a communication of the first transmission (M1) and/or of the second transmission (M2) occurs by means of a packet-oriented transmission protocol.

11. Use of a telephone (EG1) for carrying out the method according to any one of the preceding claims.

12. A communication system with a communication device, in particular, with a telephone (EG1), with a communication server (KS), with an information server (IS), and with a data server (WS),
wherein the communication device comprises
- a telephony unit (TEL) for implementing a voice connection and/or a first transmission (M1) in the context of the triggering of a service that is independent of a voice connection to the communication server (KS) with which the telephone (EG1) is associated,
**characterized by**
- an arrangement of the telephone (EG1), of the communication server (KS) for the private conveyance or provision of voice services for telephones (EG1) registered to the communication server, and of the information server (IS) in a limited Intranet or limited local network (LAN),
- a monitoring unit (EVTL) for monitoring data received on the telephone (EG1), data which is associated with a second transmission (M2), by means of a port listener or of an event listener, in such a manner that the second transmission (M2) is independent of the first transmission and of a voice connection,
- a processing unit (ISF) for the acquisition of the received data belonging to the second transmission (M2) and for the output-capable conversion of the data for a display unit (ANZ2) and for the addressing of the display unit (ANZ2) for the outputting of the data converted for the display unit (ANZ2) on the basis of the addressing by the processing unit (ISF),
wherein the communication server (KS) is set up so as to determine, upon arrival of the first transmission (M1), an identification information of the first transmission (M1), to transmit a first interrogation connection (A1) with or on the basis of the identification information to the information server (IS), and to carry out the second transmission (M2) to the communication device (EG1),
wherein the second transmission (M2) comprises the read-out data, which is provided from a data set determined by the information server (IS) only for the display unit (ANZ2),
wherein the information server (IS) comprises
- a detection unit for detecting the first interrogation connection (A1),
- a determination unit for determining the data set for the identification information, which is associated with the identification information, for the identification information,
- a transmission unit for the transmission of the data set via the first interrogation connection (A1) to the communication server (KS) and for the initiation of the second transmission (M2) to the communication device (EG1), wherein the second transmission (M2) comprises the read-out data which are provided from the determined data set only for the display unit (ANZ2), and
- an interrogation unit for the provision of the data set from a local databank (DB) or for the sending of a second interrogation connection (A2) to the at least one data server (WS) of an additional data network (NW), in particular of the global Internet, and for the storing of information of a received response from the data server (WS) in the data set, wherein only the information server (IS) is known in the additional data network (NW).

## Revendications

1. Procédé de mise à disposition d'un service sur un téléphone (EG1), dans lequel
- une action utilisateur sur le téléphone (EG1) destinée à déclencher un service indépendant d'une communication vocale est acquise ;
- du fait de cette acquisition, une première transmission (M1) est initiée par le téléphone (EG1) vers un serveur de communication (KS) auquel le téléphone (EG1) est associé, **caractérisé en ce que**
- le téléphone (EG1), le serveur de communication (KS) destiné à la fourniture privée ou la mise à disposition de services téléphoniques pour des téléphones (EG1) enregistrés sur le serveur de communication, et un serveur d'information (IS) sont disposés dans un Intranet délimité ou dans un réseau local (LAN) délimité,
- le téléphone (EG1) démarre une surveillance des données reçues sur le téléphone (EG1), correspondant à une deuxième transmission (M2), au moyen d'un détecteur de port ou d'un détecteur d'événement de telle sorte que la deuxième transmission (M2) est indépendante de la première transmission et d'une communication vocale,
- lors de la réception de la première transmission (M1) sur le serveur de communication (KS), le serveur de communication (KS) détermine des informations d'identification de la première transmission (M1), sur la base desquelles le serveur d'information (IS) détermine un enregistrement associé aux informations d'identification et devant être mis à disposition par au moins un serveur de données (WS) d'un autre réseau de données (NW), notamment de l'Internet mondial, ou par une base de données locale (DB), dans lequel seul le serveur d'information (IS) est connu dans l'autre réseau de données (NW),
- la deuxième transmission (M2) indépendante d'une communication vocale est initiée par le serveur d'information (IS) ou le serveur de communication (KS) vers le téléphone (EG1), dans lequel la deuxième transmission (M2) comprend les données lues dans l'enregistrement déterminé, prévues uniquement pour un affichage sur le téléphone (EG1),
- les données sont acquises et émises par le téléphone (EG1) en cas de détection de la réception des données sur le téléphone (EG1) dans le cadre de la surveillance.

2. Procédé selon la revendication 1,
**caractérisé en ce**
**que**, du fait de la réception de la première transmission (M1) sur le serveur de communication (KS) avant la détermination de l'enregistrement, un message de requête (A2) est fourni à l'au moins un serveur de données (WS) par le serveur d'information (IS) et les informations d'une réponse reçue sont enregistrées dans l'enregistrement.

3. Procédé selon la revendication 1,
**caractérisé en ce**
**qu'**avant la réception de la première transmission (M1) sur le serveur de communication (KS), un message de requête (A2) est fourni à l'au moins un serveur de données (WS) par le serveur d'information (IS) et les informations d'une réponse reçue sont enregistrées dans l'enregistrement.

4. Procédé selon la revendication 1 ou 3,
**caractérisé en ce**
**qu'**avant la réception de la première transmission (M1) sur le serveur de communication (KS) une pluralité de messages de requête (A2) est fournie à l'au moins un serveur de données (WS) par le serveur d'information (IS) et les informations d'une réponse respective reçue sont enregistrées dans un enregistrement individuel pour le message de requête (A2).

5. Procédé selon l'une quelconque des revendications précédentes,
**caractérisé en ce**
**que** le serveur de données (WS) ou l'au moins un serveur de données (WS) sont réalisés comme des serveurs Web mettant à disposition des sites Web sur Internet.

6. Procédé selon l'une quelconque des revendications précédentes,
**caractérisé en ce**
**que** les informations d'identification sont transmises du téléphone (EG1) au serveur de communication (KS) dans le cadre de la première transmission (M1).

7. Procédé selon l'une quelconque des revendications précédentes,
**caractérisé en ce**
**qu'**un numéro d'appel de service du serveur de communication (KS), utilisé pour l'adressage pour la première transmission (M1), est lu dans la première transmission (M1) en tant que premier élément constitutif des informations d'identification.

8. Procédé selon l'une quelconque des revendications précédentes,
**caractérisé en ce**
**que** la première transmission (M1) est exécutée en tant que signalisation entre le téléphone (EG1) et le serveur de communication (KS) et
**qu'**un paramètre de la signalisation et/ou un élément de protocole de la signalisation sont déterminés, en vue de la détermination d'un deuxième élément constitutif des informations d'identification.

9. Procédé selon l'une quelconque des revendications précédentes,
**caractérisé en ce**
**qu'**avant même l'initiation de la première transmission (M1), une communication vocale (V) est établie entre le téléphone (EG1) et un autre dispositif de communication (EG2), et qu'un numéro d'appel du dispositif de communication (EG2), utilisé dans le cadre de la communication vocale (V), est déterminé en tant que troisième élément constitutif des informations d'identification.

10. Procédé selon l'une quelconque des revendications précédentes,
**caractérisé en ce**
**qu'**une communication de la première transmission (M1) et/ou de la deuxième transmission (M2) est effectuée au moyen d'un protocole de transmission orienté paquets.

11. Utilisation d'un téléphone (EG1) pour l'exécution du procédé selon l'une quelconque des revendications précédentes.

12. Système de communication comportant un dispositif de communication, notamment un téléphone (EG1), un serveur de communication (KS), un serveur d'information (IS) et un serveur de données (WS),
dans lequel le dispositif de communication comprend
- une unité de téléphonie (TEL) pour l'exécution d'une communication vocale et/ou d'une première transmission (M1) au serveur de communication (KS) auquel le téléphone (EG1) est associé dans le cadre du déclenchement d'un service indépendant d'une communication vocale,
**caractérisé par**
- une disposition du téléphone (EG1), du serveur de communication (KS) pour la fourniture privée ou la mise à disposition de services téléphoniques pour les téléphones (EG1) enregistrés sur le serveur de communication, et du serveur d'information (IS) dans un Intranet délimité ou un réseau local (LAN) délimité,
- une unité de surveillance (EVTL) pour la surveillance des données reçues sur le téléphone (EG1), correspondant à une deuxième transmission (M2), au moyen d'un détecteur de port ou d'un détecteur d'événement de telle sorte que la deuxième transmission (M2) est indépendante de la première transmission et d'une communication vocale,
- une unité de traitement (ISF) pour l'acquisition des données reçues correspondant à la deuxième transmission (M2) et pour la conversion, compatible avec l'émission, des données pour une unité d'affichage (ANZ2), et pour l'adressage de l'unité d'affichage (ANZ2) pour l'émission des données converties pour l'unité d'affichage (ANZ2) sur la base de l'adressage par l'unité de traitement (ISF), dans lequel le serveur de communication (KS) est conçu pour déterminer des informations d'identification de la première transmission (M1), pour fournir une première connexion de requête (A1) avec le serveur d'information (IS) avec les informations d'identification ou sur la base de celles-ci, et pour exécuter la deuxième transmission (M2) vers le dispositif de communication (EG1), lors de la réception de la première transmission (M1),
dans lequel la deuxième transmission (M2) comprend les données lues dans un enregistrement déterminé par le serveur d'information (IS), prévues uniquement pour l'unité d'affichage (ANZ2),
dans lequel le serveur d'information (IS) comprend
- une unité de détection pour la détection de la première connexion de requête (A1),
- une unité de détermination pour la détermination de l'enregistrement associé aux informations d'identification pour les informations d'identification,
- une unité de transmission pour la transmission de l'enregistrement via la première connexion de requête (A1) au serveur de communication (KS) et pour l'initiation de la deuxième transmission (M2) vers le dispositif de communication (EG1),
dans lequel la deuxième transmission (M2) comprend les données lues dans l'enregistrement déterminé, prévues uniquement pour l'unité d'affichage (ANZ2), et
- une unité de requête pour la mise à disposition de l'enregistrement à partir d'une base de données locale (DB) ou via la fourniture d'une deuxième connexion de requête (A2) à l'au moins un serveur de données (WS) d'un autre réseau de données (NW), notamment de l'Internet mondial, et pour l'enregistrement d'informations d'une réponse reçue du serveur de données (WS) dans l'enregistrement, dans lequel seul le serveur d'information (IS) est connu dans l'autre réseau de données (NW).
